# EUROPEAN PATENT APPLICATION

(11) **EP 2 777 945 A2**
(43) Date of publication of application: **17.09.2014**
(21) Application number: 14156558.0
(22) Date of filing: 25.02.2014
(51) Int. Cl.: B60B 27/00, B60B 27/02

(54) **Bicycle hub assembly**

(30) Priority: 14.03.2013 TW 102109064; 27.01.2014 TW 103102997
(71) Applicant: Chosen Co., Ltd., Changhua County (TW)
(72) Inventor: Chen, Ching-Shu, Changhua County (TW)
(74) Representative: Becker Kurig Straus

(57) **Abstract**

A bicycle hub assembly includes an axle (10), a first axle bearing (20) having an inner race (21) sleeved on the axle (10) and an outer race (22), a second axle bearing (30) having an inner race (31) sleeved on the axle (10) and an outer race (32), an axle sleeve unit (4) including first and second inner race stopping portions (42, 43) respectively stopped against the inner race (21) of the first axle bearing (20) and the inner race (31) of the second axle bearing (30), one of both of the first and second inner race stopping portions (42, 43) being made in the form of a flange, a hub shell unit (5) including a hub shell (50) connected to the outer race (22) of the first axle bearing (20) and a driven portion (61), and a driving unit (7) connected to the outer race (32) of the second axle bearing (30) and including a driving member (90) for rotating the driven portion (61) of the hub shell unit (5).

## Description

### BACKGROUND OF THE INVENTION

### 1. Field of the Invention

The present invention relates to bicycle technology, and more particularly to a bicycle hub assembly.

### 2. Description of the Related Art

A conventional bicycle hub assembly is known having two ball bearings respectively mounted on the hub shell and the freewheel. US6827497B2 discloses a free-wheel hub assembly, which includes an axle 10 extending through a hub and having an annular axle flange 12 projecting radially and outwardly therefrom into the hub, and inner and outer bearings 21 and 31 sleeved on the axle 10 and respectively abutted against two opposite ends of the axle flange 12. The axle 10 and the annular axle flange 12 are specially designed and cannot be shared with other specifications.

US6907972B2 teaches the use of a tubular sleeve 50 in a free-wheel hub assembly for a bicycle, however, this design of tubular sleeve 50 has no inner race means to support loaded bearings 21 and 31.

US7581795B1 discloses a bicycle frame equipped with an axle sleeve (not marked with a number) to support bearings 13; however the axle sleeve is a planar sleeve without any flange at each end. Due to diameter limitation, the axle sleeve cannot provide a flanged end portion. In consequence, the surface area of the axle sleeve for stopping against the inner race of the bearings is insufficient.

That is, there is room for improvement on the composition structure of the aforesaid bicycle hub assembly with the mating freewheel.

### SUMMARY OF THE INVENTION

The present invention has been accomplished under the circumstances in view. It is the main object of the present invention to provide a bicycle hub assembly, which enables the axle sleeve to be tightly stopped between the inner races of two opposite axle bearing, preventing the axle sleeve from being linked to the driving unit and reducing friction between the axle sleeve and the axle..

To achieve this and other objects of the present invention, a bicycle hub assembly of the invention includes an axle, a first axle bearing having an inner race sleeved on the axle and an outer race, a second axle bearing having an inner race sleeved on the axle and an outer race, an axle sleeve unit including first and second inner race stopping portions respectively stopped against the inner race of the first axle bearing and the inner race of the second axle bearing, one of both of the first and second inner race stopping portions being made in the form of a flange, a hub shell unit including a hub shell connected to the outer race of the first axle bearing and a driven portion, and a driving unit connected to the outer race of the second axle bearing and including a driving member for rotating the driven portion of the hub shell unit.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is an exploded view of a bicycle hub assembly in accordance with a first embodiment of the present invention.
FIG. 2 is a sectional assembly view of the bicycle hub assembly in accordance with the first embodiment of the present invention.
FIG. 3 is a sectional assembly view of a bicycle hub assembly in accordance with a second embodiment of the present invention.
FIG. 4 is a sectional assembly view of the bicycle hub assembly in accordance with a third embodiment of the present invention.
FIG. 5 is a sectional assembly view of the bicycle hub assembly in accordance with a fourth embodiment of the present invention.
FIG. 6 is a sectional assembly view of the bicycle hub assembly in accordance with fifth embodiment of the present invention.
FIG. 7 is a sectional assembly view of the bicycle hub assembly in accordance with sixth embodiment of the present invention.
FIG. 8 is a sectional assembly view of the bicycle hub assembly in accordance with seventh embodiment of the present invention.

### DETAILED DESCRIPTION OF THE INVENTION

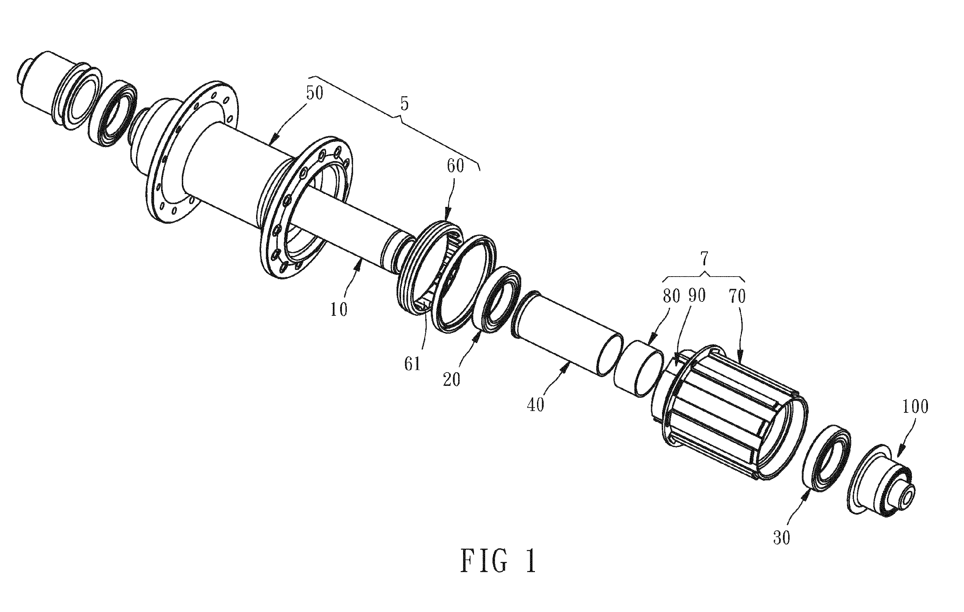

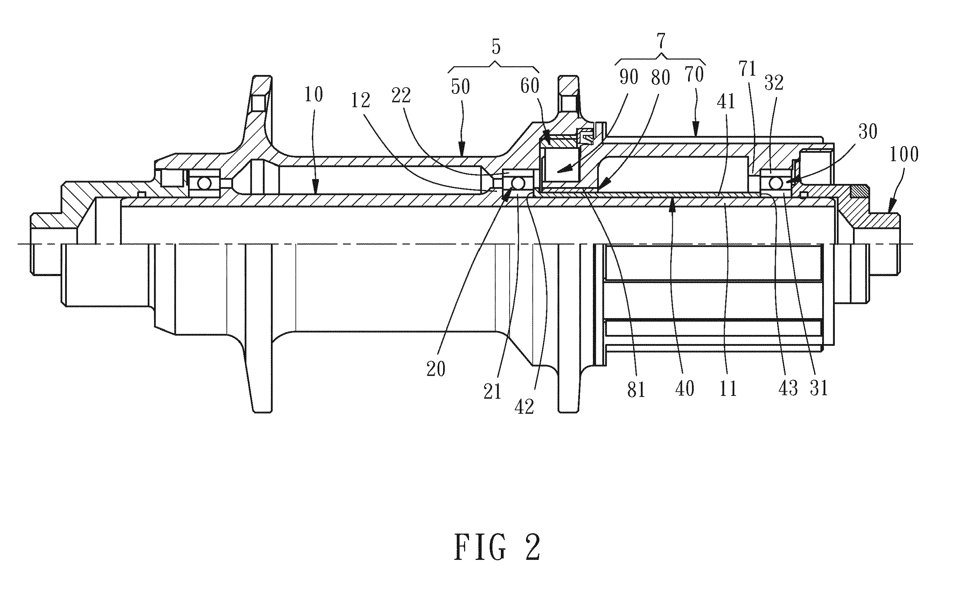

Referring to FIGS. 1 and 2, a bicycle hub assembly in accordance with a first embodiment of the present invention is shown. The bicycle hub assembly comprises:
an axle 10, which comprises an axle body 11 and a bearing portion 12;
a first axle bearing 20 comprising an inner race 21 sleeved on the axle 10 and stopped against the bearing portion 12 of the axle 10, and an outer race 22;
a second axle bearing 30, which comprises an inner race 31 sleeved on the axle 10, and an outer race 32;
an axle sleeve unit 4 comprising an axle sleeve 40, which comprises a sleeve body 41 loosely sleeved on the axle 10, a first inner race stopping portion 42 made in the form of a flange lager than the outer diameter of the sleeve body 41 and stopped against the inner race 21 of the first axle bearing 20 and a second inner race stopping portion 43 stopped against the inner race 31 of the second axle bearing 30;
a hub shell unit 5, which comprises a hub shell 50 connected to the outer race 22 of the first axle bearing 20, a driven member 60 connected to or formed integral with the hub shell 50 and providing a driven portion 61 made in the form of an internal gear;
a rotating member 70 connected to the outer race 32 of the second axle bearing 30 and defining an axle bearing positioning portion 71 in flush with the inner race stopping portion 43 of the axle sleeve 40;
a self-lubricating bushing 80 comprising a bushing body 81 spaced from the inner race stopping portion 42 of the axle sleeve 40 by a gap for smooth rotation;
a driving member 90 made in the form of a set of pawls and mounted at the rotating member 70 and adapted for moving the driven portion 61 of the driven member 60 to rotate the hub shell unit 5; and
a fastener 100 fastened to the axle 10 to impart a pressure to the inner race 31 of the second axle bearing 30 against the inner race stopping portion 43 of the axle sleeve 40;
wherein the rotating member 70, the self-lubricating bushing 80 and the driving member 90 can be broadly defined to constitute a driving unit 7; the fastener 100 and the axle 10 can be broadly defined to constitute an axle unit.

Based on the structure of the above-described embodiment of the present invention, the axle sleeve 40 is tightly stopped against the inner races of the axle bearings that are mounted at the two opposite ends thereof. Thus, during high speed rotation, the axle sleeve will not be driven by the driving unit 7, reducing friction between the axle sleeve 40 and the axle 10.

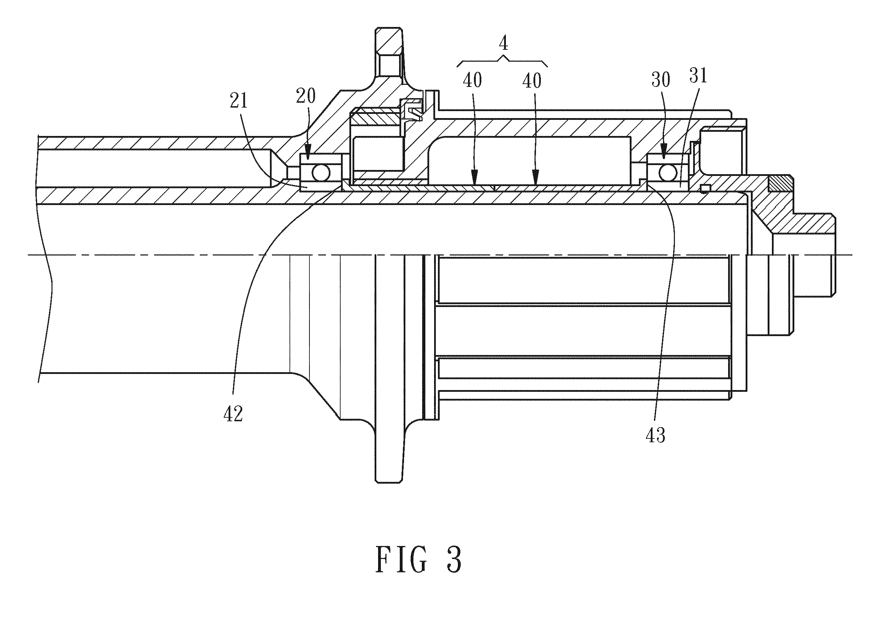

Referring to FIG. 3, a bicycle hub assembly in accordance with a second embodiment is shown. This second embodiment is substantially similar to the aforesaid first embodiment with the exception that two axle sleeves 40 are used in this second embodiment to facilitate installation; further, the flange-shaped inner race stopping portions 42 and 43 are respectively stopped against the first axle bearing 20 and the second axle bearing 30.

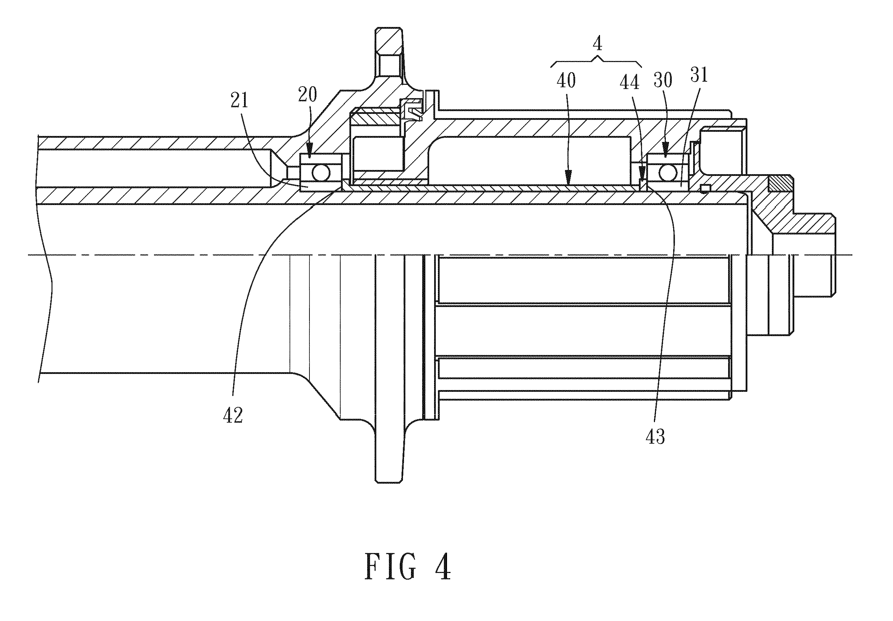

Referring to FIG. 4, a bicycle hub assembly in accordance with a third embodiment is shown. This third embodiment is substantially similar to the aforesaid first embodiment with the exception that: an end stopper member 44, for example, washer, is set between one end of the axle sleeve 40 and the second axle bearing 30; the second inner race stopping portion 43 is formed of the end stopper member 44.

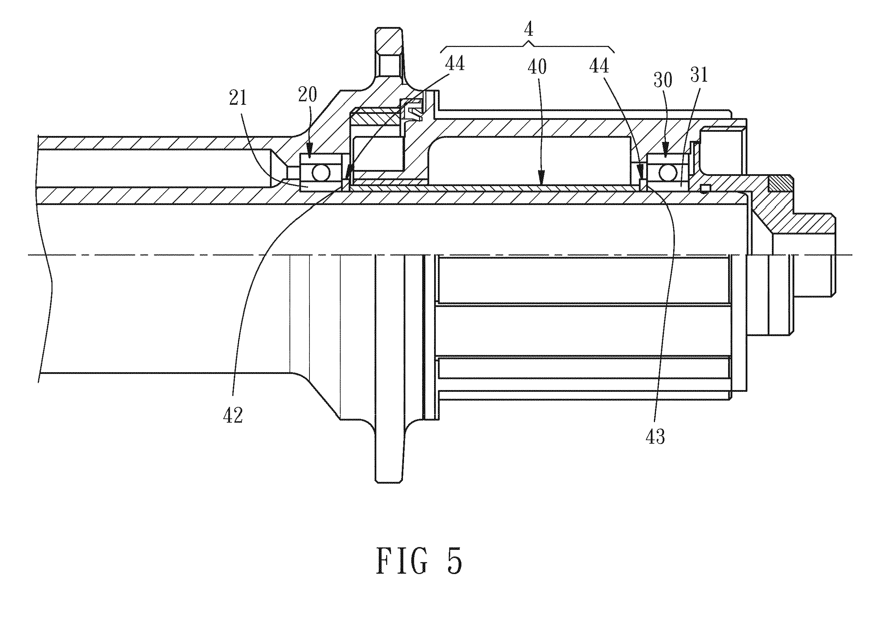

Referring to FIG. 5, a bicycle hub assembly in accordance with a fourth embodiment is shown. This fourth embodiment is substantially similar to the aforesaid first embodiment with the exception that: the first inner race stopping portion 42 and second inner race stopping portion 43 of the axle sleeve 40 are respectively formed of one respective end stopper member 44 and respectively stopped between the axle sleeve 40 and the first axle bearing 20 and second axle bearing 30.

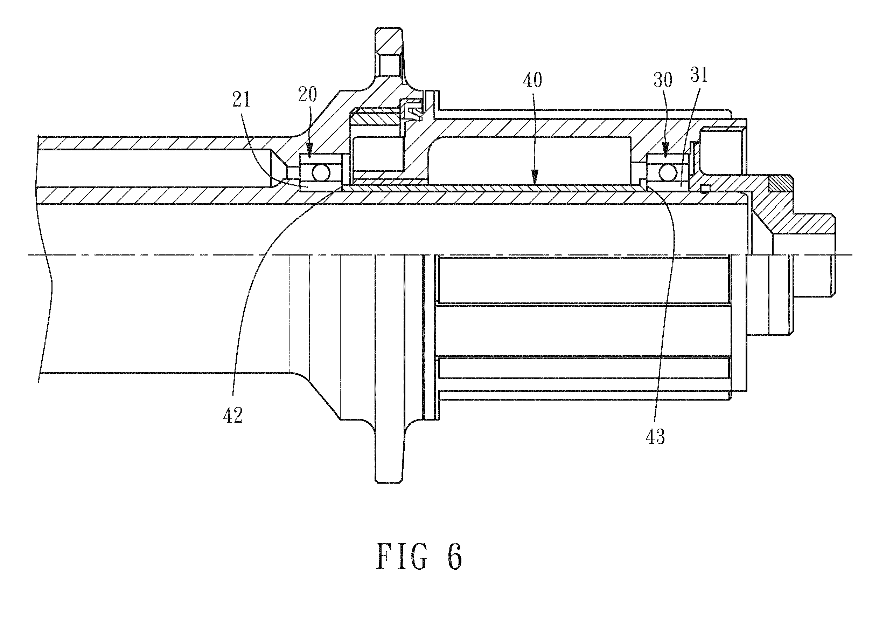

Referring to FIG. 6, a bicycle hub assembly in accordance with a fifth embodiment is shown. This fifth embodiment is substantially similar to the aforesaid first embodiment with the exception that: the first inner race stopping portion 42 of the axle sleeve 40 is neither flanged nor provided with an end stopper member 44; the second inner race stopping portion 43 of the axle sleeve 40 is flanged.

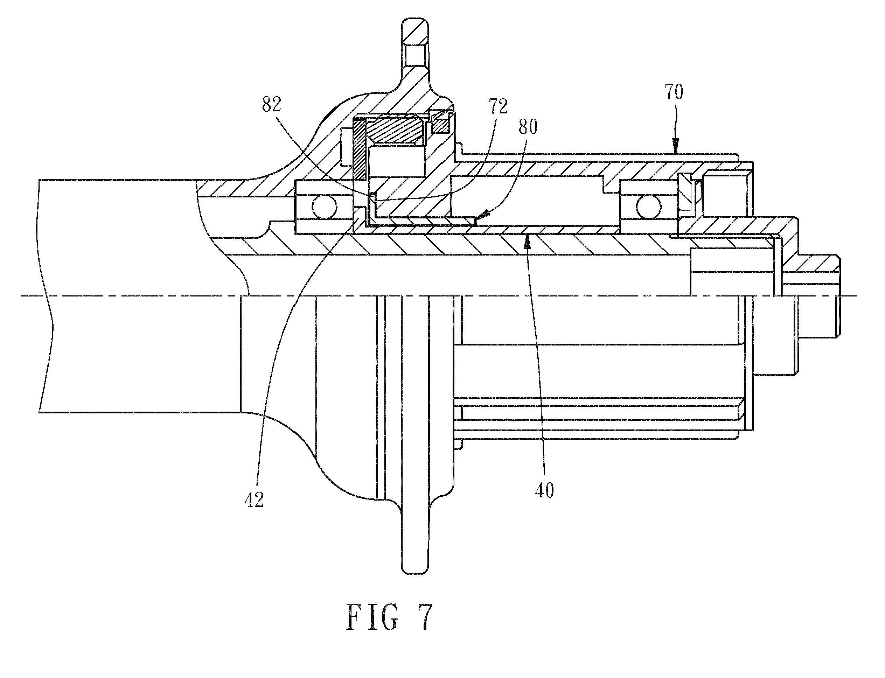

Referring to FIG. 7, a bicycle hub assembly in accordance with a sixth embodiment is shown. This sixth embodiment is substantially similar to the aforesaid first embodiment with the exception that: the rotating member 70 comprises a countersunk hole 72; the self-lubricating bushing 80 further comprises a flange 82 connected to the bushing body 81 and stopped at the bottom side of the countersunk hole 72 of the rotating member 70.

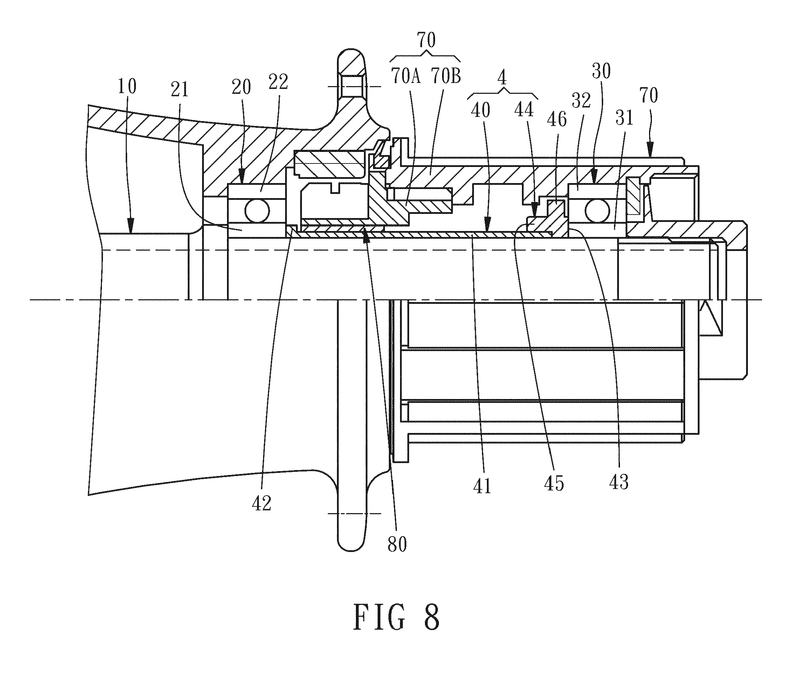

Referring to FIG. 8, a bicycle hub assembly in accordance with a seventh embodiment is shown. This seventh embodiment is substantially similar to the aforesaid embodiments with the exception that: the end stopper member 44 further has a connecting barrel 45 integrally connected to the second inner race stopping portion 43, the connecting barrel 45 is interference-fitted on or fixedly connected to an outer periphery of the sleeve body 41, thereby enhanced the end stopper member 44 and the sleeve body 41 truly rotating together.

Further, the end stopper member 44 still has a collar 46, the outer diameter of the collar 46 is larger than the outer diameter of the connecting barrel 45 and the second inner race stopping portion 43, the collar 46 may extended relative to the outer race 32 of the second axle bearing 30; the collar 46 is used as a separator between the second axle bearing 30 and the inner space, the collar 46 also provides more rotational inertia during rotation.

Further, the rotating member 70 is consisting of a first rotating body 70A and a second rotating body **70B.**

Except the aforesaid embodiments, the invention can also be made in any of various other alternate forms as follows:
For example, the axle sleeve 40 of the axle sleeve unit 4 provides a rotation-preventing portion (not shown); the end stopper member 44 also provides a rotation-preventing portion (not shown) mating the rotation-preventing portion of the axle sleeve 40 to prevent relative rotation between the axle sleeve 40 and the end stopper member 44.

In conclusion, the invention enables the two opposite ends of the axle sleeve to be respectively stopped against the inner races of the two opposite axle bearings to prevent the axle sleeve from being linked to the driving unit, reducing friction between the axle sleeve and the axle.

Although particular embodiments of the present invention have been described in detail for purposes of illustration, various modifications and enhancements may be made without departing from the spirit and scope of the invention. Accordingly, the invention is not to be limited except as by the appended claims.

## Claims

1. A bicycle wheel hub assembly, characterized comprising:
an axle (10);
a first axle bearing (20) comprising an inner race (21) sleeved on said axle (10), and an outer race (22);
a second axle bearing (30) comprising an inner race (31) sleeved on said axle (10), and an outer race (32);
an axle sleeve unit (4) comprising opposing first and second inner race stopping portions (42, 43) respectively stopped against the inner race (21) of said first axle bearing (20) and the inner race (31) of said second axle bearing (30), at least one of said first and second inner race stopping portions (42, 43) being made in the form of a flange;
a hub shell unit (5) comprising a hub shell (50) connected to the outer race (22) of said first axle bearing (20), and a driven portion (61); and
a driving unit (7) connected to the outer race (32) of said second axle bearing (30), said driving unit (7) comprising a driving member (90) for rotating said driven portion (61) of said hub shell unit (5).

2. The bicycle wheel hub assembly as claimed in claim 1, **characterized in that** the first inner race stopping portion (42) of said axle sleeve unit (4) for stopping against said first axle bearing (20) is flanged.

3. The bicycle wheel hub assembly as claimed in claim 2, **characterized in that** the second inner race stopping portion (43) of said axle sleeve unit (4) for stopping against said second axle bearing (30) is flanged.

4. The bicycle wheel hub assembly as claimed in claim 1, **characterized in that** the second inner race stopping portion (43) of said axle sleeve unit (4) for stopping against said second axle bearing (30) is flanged.

5. The bicycle wheel hub assembly as claimed in claim 1, **characterized in that** said axle sleeve unit (4) comprises an axle sleeve (40); said first and second inner race stopping portions (42, 43) are located on said axle sleeve (40).

6. The bicycle wheel hub assembly as claimed in claim 1, **characterized in that** said axle sleeve unit (4) comprises two axle sleeves (40) connected together; said first and second inner race stopping portions (42, 43) are respectively located on said two axle sleeves (40).

7. The bicycle wheel hub assembly as claimed in claim 1, **characterized in that** said axle sleeve unit (4) comprises at least one axle sleeve (40) and at least one end stopper member (44), at least one of said inner race stopping portions (42, 43) being formed of one respective said end stopper member (44).

8. The bicycle wheel hub assembly as claimed in claim 7, **characterized in that** the number of said at least one end stopper member (44) of said axle sleeve unit (4) is 2, and these two end stopper members (44) respectively form said first and second inner race stopping portions (42, 43).

9. The bicycle wheel hub assembly as claimed in claim 7, **characterized in that** said end stopper member (44) further has a connecting barrel (45) interference-fitted on or fixedly connected to said sleeve body (41) of the axle sleeve (40).

10. The bicycle wheel hub assembly as claimed in claim 9, **characterized in that** said end stopper member (44) further has a collar (46), the outer diameter of said collar (46) is larger than the outer diameter of said connecting barrel (45).

11. The bicycle wheel hub assembly as claimed in claim 7, **characterized in that** said end stopper member (44) further has a collar (46), the outer diameter of said collar (46) is larger than the outer diameter of said second inner race stopping portion (43).

12. The bicycle wheel hub assembly as claimed in claim 1, characterized further comprising a fastener (100) fastened to said axle (10) to force the inner race (31) of said second axle bearing (30) against the second inner race stopping portion (43) of said axle sleeve (40).

13. The bicycle wheel hub assembly as claimed in claim 1, **characterized in that** said axle sleeve (40) of said sleeve unit comprises a rotation-preventing portion; said end stopper member (44) comprise a rotation-preventing portion mating the rotation-preventing portion of said axle sleeve (40) to prevent relative rotation between said axle sleeve (40) and said end stopper member (44).

14. The bicycle wheel hub assembly as claimed in claim 1, characterized further comprising a self-lubricating bushing (80) having a bushing body (81) set between said rotating member (70) of said driving unit (7) and said axle sleeve unit (4).

15. The bicycle wheel hub assembly as claimed in claim 14, **characterized in that** said self-lubricating bushing (80) having a flange (82) connected to said bushing body (81), said rotating member (70) comprising a countersunk hole (72), the flange (82) of said self-lubricating bushing (80) being engaged in said countersunk hole (72).
